(19) Europäisches Patentamt
European Patent Office
Office européen des brevets

(11) **EP 4 029 754 B1**

(12) **EUROPEAN PATENT SPECIFICATION**

(45) Date of publication and mention
of the grant of the patent:
**12.03.2025 Bulletin 2025/11**

(21) Application number: **20862498.1**

(22) Date of filing: **11.11.2020**

(51) International Patent Classification (IPC):
**B61B 3/02** *(2006.01)*    **B61B 5/02** *(2006.01)*
**B61B 13/00** *(2006.01)*    **E01B 25/00** *(2006.01)*
**E01B 2/00** *(2006.01)*    **E01B 25/30** *(2006.01)*
**B29D 23/00** *(2006.01)*

(52) Cooperative Patent Classification (CPC):
**E01B 25/00; E01B 2/003; E01B 25/305;**
B29D 23/003

(86) International application number:
**PCT/BY2020/000011**

(87) International publication number:
**WO 2021/046627 (18.03.2021 Gazette 2021/11)**

(54) **METHOD OF PRODUCING AN ULTRA-HIGH-SPEED TRANSPORT COMPLEX**

VERFAHREN ZUR HERSTELLUNG EINES ULTRASCHNELLEN TRANSPORTKOMPLEXES

PROCÉDÉ DE PRODUCTION ET DISPOSITIF DE SYSTÈME DE TRANSPORT À TRÈS GRANDE VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.07.2022 Bulletin 2022/29**

(73) Proprietor: **Unitsky, Anatoli Eduardovich**
**222838, Minsk region, Pukhovichi district (BY)**

(72) Inventor: **Unitsky, Anatoli Eduardovich**
**222838, Minsk region, Pukhovichi district (BY)**

(74) Representative: **Winter, Brandl - Partnerschaft mbB**
**Alois-Steinecker-Straße 22**
**85354 Freising (DE)**

(56) References cited:
**WO-A1-2019/162068    WO-A2-2018/098405**
**CN-A- 108 755 294    KR-B1- 101 853 915**
**RU-C1- 2 080 268    UA-C2- 76 484**
**US-A1- 2016 229 419**

Remarks:
The filing date of the international application is within two months from the date of expiration of the priority period (R. 26bis.3 PCT).

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical field

The present invention is related to the field of superspeed transport (speed more than 700 km/h), in particular - to main-line transport systems for transportation of passengers and goods, which provide movement of vehicle along track structure in overpass of closed type.

## Background Art

A subway-type transport system is known, which represents a tunnel with a rail cord of track structure and suitable vehicles located therein [1].

The disadvantages of such transport system are the significant restrictions on the speed of vehicles in the traditional subway and the significant cost of building this transport system.

Supersonic above-ground transport system by Yansufin is also known, comprising a vehicle with cars equipped at the bottom with a linear motor rotor, super electromagnets and super-permanent magnets. On the supports there is an all-metal airproof main pipe made up of separate pipes connected to each other hermetically by means of annular bellows. Gates are made at terminal and intermediate stops of vehicle. The cars are equipped with doors opening outwards. Along the entire length of the track, vacuum pumps adjusted for automatic operation are installed on the main pipe, and wind turbines are installed on top of the main pipe, mainly at the joints of separate pipes. [2].

The disadvantage of such a transport system is the low efficiency and high cost of infrastructure to ensure vehicle levitation on extended sections of the track structure.

A superfast transport system is also known, wherein the rail track is located on a closed reinforced concrete overpass in above ground or underground position. The cars represent the fuselage of the aircraft, and for the lateral stability of the cars on the curved sections of the rail track above the cars in the overpass, a special rail is provided, grabbed by rollers mounted on the roof of the cars. The rail track at the beginning of the movement is directed downhill, which, when moving back, is uphill and helps to carry out more effective braking at the end of the track; for the same purpose, the air is sucked from the overpass on the side of the destination station and pumped on the side of the departure station [3].

However, the transport system of the above construction does not make full use of the possibilities to reduce the drag of the air flow at higher speeds of the proposed vehicle, in addition, a significant drawback of the above transport system is the limitation in smoothness and softness of travel due to the lack of flatness and straightness of the track structure, which does not allow to develop high speeds.

The Hyperloop transport system is known, which includes an overhead pipeline located on supports, inside which single transport capsules move. Special guides located in the nose of the transport capsule and ventilator redirect the oncoming air flow under the bottom, which allows to create air cushion under the capsule in forevacuum conditions. The capsule is driven by a linear electric motor, wherein the stator is an aluminum rail, installed in the pipeline at a certain interval. Rotor is located in each capsule. Since the stator performs not only acceleration, but also deceleration, in the latter case the kinetic energy of the capsule is also converted to electric [4].

The disadvantages of such transport system are complexity of control, ensuring the stabilization of the transport capsule and preventing its rotation around its own axis, as well as low efficiency and high cost of infrastructure to ensure levitation of the transport capsule during its movement.

Among the widely used in the world pipeline transport systems with a closed-type overpass, a system is known wherein the design of the outer shell of the transport structure consists of rigid composite reinforced pipes made of several materials. Each multilayer pipe contains connected to each other internal protective layer made of wear-resistant material, intermediate layer and external protective layer made of composite material, as well as flanges for connecting to adjacent pipes or pipe fittings. Internal protective layer and intermediate layer are attached to each other. Intermediate layer is made of polymer concrete reinforced with longitudinal rods rigidly attached with flanges into reinforcing frames [5].

However, such transport system does not provide for the use thereof as a closed-type track structure for movement inside it of a self-powered vehicle, providing for the transportation of passengers and goods.

Also known is a transport system of railway communication, which includes an underground reinforced concrete tunnel of a rectangular shape of a shallow foundation (made in a temporarily open trench), rails welded at the ends, laid on the bottom of the tunnel with a shock absorbing tape that provides vibration and sound insulation protection and a shuttle train with electric drive and cars installed on the tunnel rails on noiseless wheels [6].

The disadvantages of such transport system are the significant restrictions on the speed of movement of vehicles and substantial cost of constructing this transport system.

It is known that in 1969, the dean of the Faculty of Science and Technology of Majo University from Nagoya Kenoya Ozawa (English: *Kyunojo Ozawa* or *Hisanojo Ozawa*) built a vacuum tunnel in which he placed a jet train that reached a speed of 2300 km/h. The length of the train was 220 m, diameter 5 m. The following year, Ozawa drove experimental animals on this train [7].

However, due to the high cost of the vacuum tunnel and track structure, this transport system did not receive further development.

A method of constructing a highway for high-speed electric freight and passenger transport is known, according to which extended reinforced concrete overpasses with rails laid on longitudinal and transverse girders are erected on piles. The main line is passed through tunnels and equipped with platforms for passengers and power transmission line pylons [8].

However, in the transport system according to the above method, there is no reduction in airflow drag at high speeds of the proposed vehicle, moreover, the significant disadvantages of such transport system are the smoothness and softness limitations due to the lack of flatness and straightness of the track structure, which prevents the development of high speeds of vehicles.

The above mentioned technical solutions for construction of transport complexes, are characterized, both from the economic and technical side, respectively, by the increased cost and insufficient straightforwardness of the track structures used therein, due to the presence in their structures of joints of both rail track and intersectional - between elements of the overpass of the closed type, which prevents the creation of a "velvet smooth" track for the vehicle, and this means that it is impossible to achieve high speed with the corresponding reliability of transportation on the track structures of transport complexes of this type..

High-speed transport complexes have been further evolving with the development and creation of transport systems based on the string track structure by Yunitski, which is based on the use, as the main structural elements of the rail and the track structure as a whole, of load-bearing string-rod components prestressed by tensioning in longitudinal direction.

The method of manufacturing and design of the superspeed transport complex by Yunitski, according to which a tunnel (made in the form of a pipe prestressed in longitudinal direction by tensile force) is mounted in spans between the supports located on the foundation, is the closest in technical essence and achieved positive effect to the proposed one. The tunnel is equipped with a pretensioned track structure and a self-powered vehicle mounted thereon with possibility of movement, containing a body with a power unit [9].

A transport complex with the said track structure ensures its high carrying capacity, however, significant material and labor intensity with low processability and penalized efficiency of the construction process of such transport complex, caused by the design of the track structure, as well as the difficulty of transportation to the installation site of large-sized extended span structures in the form of solid pipes of large diameter and their installation in the field with a complex landscape, and their limited possibilities for covering large spans between adjacent intermediate supports - are the restraining factors of the widespread use of such transport complexes.

The next coming prior art document WO 2018/098405 A2 shows the feature of the preamble of claim 1.

The technical objective, to attain which a group of inventions is aimed, united by a single inventive design to create such a method of manufacturing and arrangement of superspeed transport complex, whereby, by improving them, creating a new design scheme and production sequence, as well as thanks to the use of modern materials, simplification of the technological process of manufacturing this complex and expansion of its functional capabilities are achieved.

The aim of the invention is to attain the following technical object:

- improvement of technological effectiveness of manufacturing process and design of superspeed transport complex as a whole.
- increase of specific load-bearing capacity of track structures;
- improvement of operational and technical characteristics of the transport complex;
- increase of rigidity of the structure, as well as the flatness of the rail track.

## Summary of invention

This object is solved by the subject matters of claims 1 and 2. Further embodiments are defined in the subclaims. More specifically, the technical aim according to the object of the invention is achieved by a method of manufacturing of superspeed transport complex by Yunitski, whereby supports are installed on foundation; made and fastened in spans between them, is at least one trussed overpass (prestressed by tensioning in longitudinal direction) in the form of a longitudinal trussed track structure of string type for self-powered vehicle; annular frames are formed and fixed on trussed overpass transversely to trussed track structure; internal and external rows of load-bearing elements (tensioned in longitudinal direction) are arranged and fixed on inner and outer surfaces of annular frames, respectively; internal and external layers are formed, of at least one sealed evacuated tunnel with annular cross-section profile of its wall made of hardening composition, by applying it on the internal and external rows of load-bearing elements respectively and filling the space between the formed internal and external layers of the sealed evacuated tunnel with the hardening material of the intermediate layer, whereas on the internal layer of the wall of the sealed evacuated tunnel, a prestressed by tensioning in longitudinal direction at least one rail cord is positioned, of a tunneled track structure for superspeed vehicle, containing body with power unit providing sealing of cabin during movement.

Achievement of this result is also ensured by the fact that the design of the superspeed transport complex by Yunitski manufactured per the method in accordance with the proposed technical approach and which includes mounted in spans between supports, located on the foundation, at least one trussed string track structure of overpass type; with at least one self-powered vehicle mounted thereon; connected to at least one tunneled track structure including a sealed evacuated tunnel with an annular cross-section profile of its wall; consisting of internal, external and intermediate layers, and at least one rail cord located in sealed evacuated tunnel, intended for superspeed vehicle with a body providing sealing of the cabin during movement and a power unit, wherein the wall of the sealed evacuated tunnel is equipped with annular frames connected to each of the layers of the wall; and its internal and external layers are made of hardening composition and reinforced with prestressed by tensioning in longitudinal direction corresponding load-bearing elements; which are fastened to the inner and outer surfaces of the annular frames, respectively; and wherein the intermediate layer of the wall is made of a hardening material filling the space between the internal and external layers of the wall.

The above result is also achieved provided that the hardening material of the intermediate layer of the wall of the sealed evacuated tunnel contains load-bearing elements of the intermediate layer prestressed by tensioning in longitudinal direction up to the nominal design force and fastened on the annular frames.

Tackling of this problem is guaranteed also under condition that concrete is used as hardening material of the intermediate layer of the wall of the sealed evacuated tunnel.

The technical objective is also achieved provided that the internal and external layers of the wall of sealed evacuated tunnel are made of a reinforced polymer hardening composition in the form of polyurethane, and/or polyurea, and/or polyetheretherketone, and/or combinations thereof.

The technical objective is also attained provided that annular frames are located at a distance L, m, from each other, which is defined by the dependence:

$$0.1 \le L/D \le 5,$$

where $D$, m - outer diameter of the sealed evacuated tunnel.

The set technical objectives are also achieved thanks to the fact that the intermediate layer of the wall of the sealed evacuated tunnel is made with thickness $h_0$, m, defined by the ratio:

$$0.025 \le h_0/D \le 0.25$$

This result is also achieved provided that the internal and external layers of the wall of the sealed evacuated tunnel are made with thicknesses, respectively, $h_1$, m, and $h_2$, m, defined by the ratios:

$$0.01 \le h_1/h_0 \le 0.1,$$

$$0.01 \le h_2/h_0 \le 0.1$$

The technical objective is also achieved provided that the load-bearing elements of the internal and external layers of the wall of the sealed evacuated tunnel are made with diameter, $d_0$, m, defined by the ratios:

$$0.25 \le d_0/h_1 \le 0.95,$$

$$0.25 \le d_0/h_2 \le 0.95$$

The solution of the given task is also attained due to the fact that adjacent load-bearing elements of the internal and external layers of the wall of the sealed evacuated tunnel are located between each other with gap $\delta$, m, defined by the ratio:

$$0 \le \delta/d_0 \le 5$$

This result is also achieved provided that adjacent layers of the wall of the sealed evacuated tunnel are connected to each other in the transverse direction along their entire length.

The embodiment of the transport complex of the proposed innovative modification - with combination of trussed and tunneled track structures made prestressed by tensioning in longitudinal direction of the corresponding load-bearing elements, allows achieving significant advantages compared to the known technical solutions. In particular, it makes it possible to achieve the required straightness of the track structures of the superspeed transport complex, increase their rigidity, reduce materials intensity and ensure compensation for temperature extensions with increase in the specific carrying capacity, processability and efficiency of its operation in general.

The above features characterizing the proposed technical approach are distinguishing, since, on the whole, they are sufficient to tackle the given technical task and achieve the expected technical result, and each of them independently - it is necessary to identify and distinguish similar technical solutions known in the art from the claimed method of manufacturing and arrangement of superspeed transport complex by Yunitski.

This set of general and distinctive features that characterize the claimed method of manufacturing and arrangement of superspeed transport complex by Yunitski is not known in the art and new and sufficient in all cases covered by the extent of legal protection.

**Brief description of drawings**

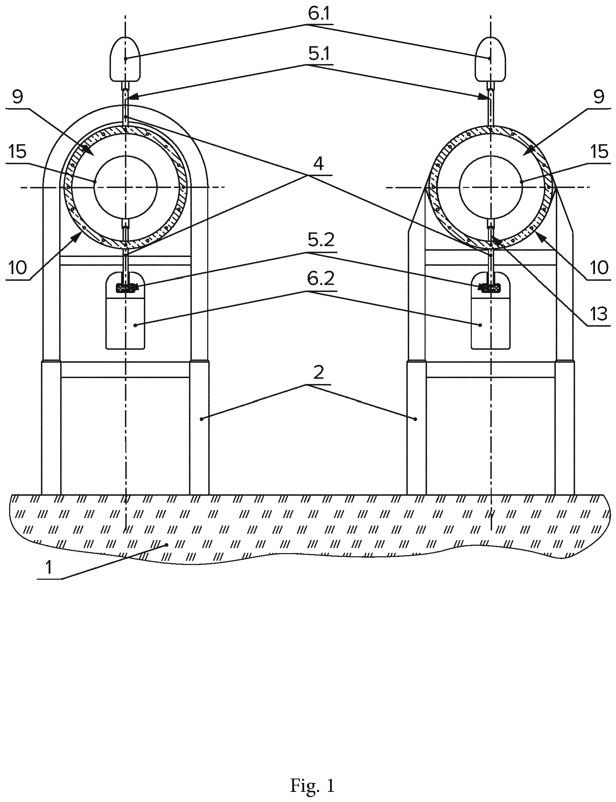

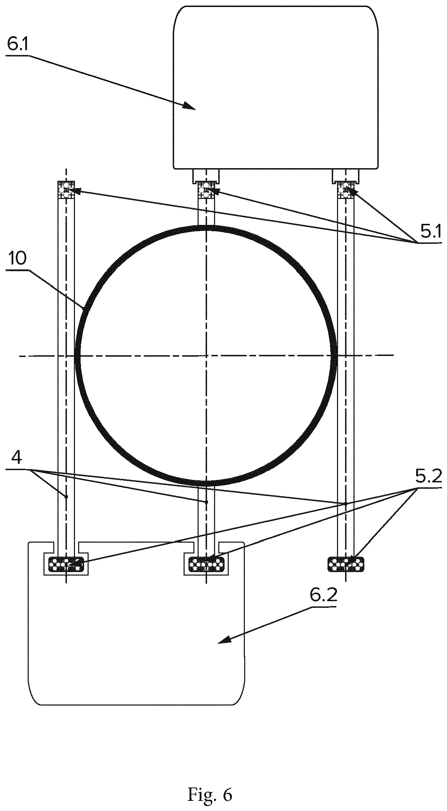

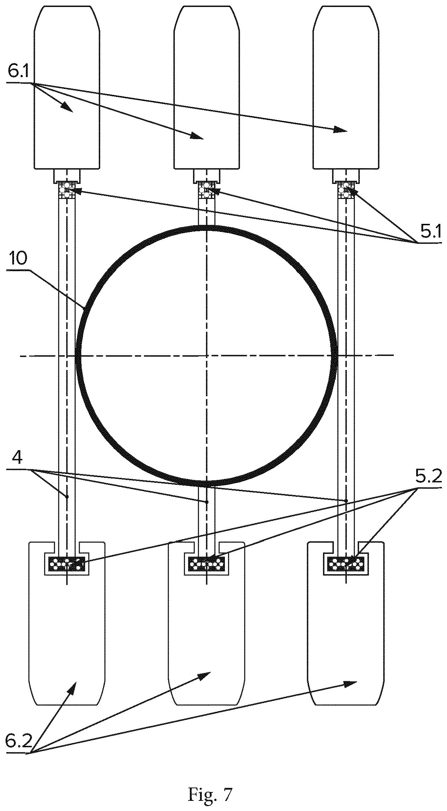

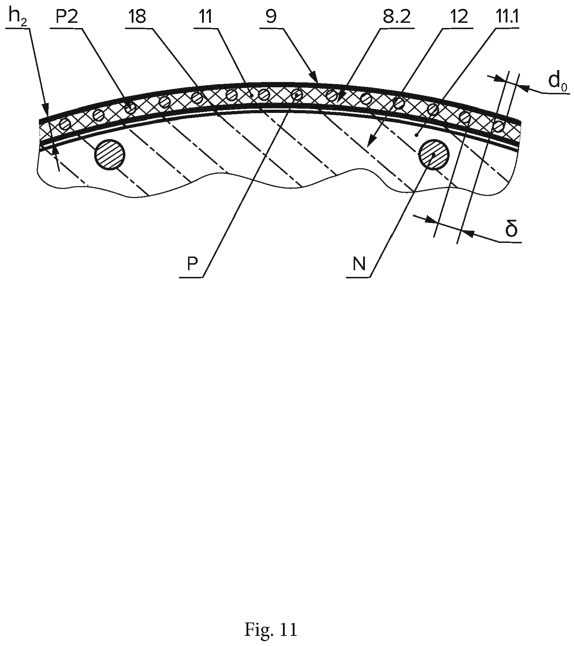

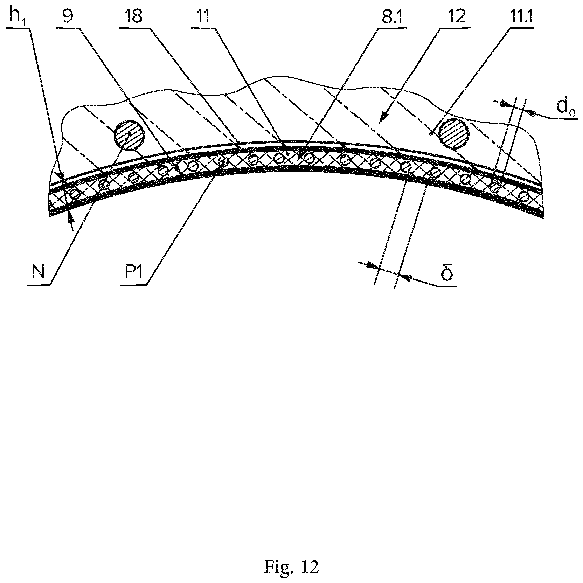

Hereinafter, the essence of the group of inventions related to a single inventive concept will be explained by a detailed description of the method of manufacturing and arrangement of superspeed transport complex by Yunitski with reference to the accompanying drawings (Figs. 1 - 13) showing the following:

Fig.1 - layout image of superspeed transport complex by Yunitski - front view (embodiment);

Fig.2 - layout image of superspeed transport complex by Yunitski - side view (embodiment);

Fig.3 - layout image of track structures of superspeed transport complex by Yunitski with corresponding vehicles - front view (embodiment);

Fig.4 - layout image of track structures of superspeed transport complex by Yunitski with six trussed track structures - front view (embodiment);

Fig.5 - layout image of transport complex with mounted and suspended vehicles of largest size installed on trussed track overpasses - front view (embodiment);

Fig.6 - layout image of transport complex with mounted and suspended vehicles of medium size installed on trussed track overpasses - front view (embodiment);

Fig.7 - layout image of transport complex with mounted and suspended vehicles of smallest size installed on trussed track overpasses - front view (embodiment);

Fig.8 - layout image of arranged on annular frame load-bearing elements of internal and external layers of wall of the sealed evacuated tunnel (embodiment);

Fig.9 - layout image of schematic view of basing of annular frame column of tunneled track structure on trussed overpasses - axonometry (embodiment);

Fig. 10 - layout image of structure of wall of the sealed evacuated tunnel - cross-section fragment (embodiment);

Fig.11 - layout image of structure of external layer of wall of the sealed evacuated tunnel - cross-section fragment (embodiment);

Fig. 12 - layout image of structure of internal layer of wall of the sealed evacuated tunnel - cross-section fragment (embodiment);

Fig.13 - layout image of stations of track structures equipped with appropriate boarding platforms - axonometry (embodiment).

Positions on Figures:

1 - foundation;
2 - support;
2*a* - anchor support;
2*b* - intermediate support;
3 - span between supports;
4 - trussed overpass;
5 - trussed track structure;
5.1 - upper chord of trussed track structure;
5.2 - lower chord of trussed track structure;
6 - self-powered vehicle;

6.1 - mounted self-powered vehicle;
6.2 - suspended self-powered vehicle;
7 - annular frame;
8.1 - internal layer of wall of sealed evacuated tunnel;
8.2 - external layer of wall of sealed evacuated tunnel;
9 - sealed evacuated tunnel;
10 - wall of sealed evacuated tunnel;
11 - hardening composition of internal and external layers of wall of sealed evacuated tunnel;
11.1 - hardening material of intermediate layer of wall of sealed evacuated tunnel;
12 - intermediate layer of wall of sealed evacuated tunnel;
13 - rail cord;
14 - tunneled track structure;
15 - superspeed vehicle;
16 - body of superspeed vehicle;
17 - power unit of superspeed vehicle;
18 - reinforcing shells of layers of wall of sealed evacuated tunnel;
19 - station;
20 - boarding platform.
$A$ - inner surface of annular frame;
$B$ - outer surface of annular frame;
$P$ - load-bearing elements of external and internal layers of wall of sealed evacuated tunnel;
$P1$ - internal row of load-bearing elements (load-bearing elements of internal layer);
$P2$ - external row of load-bearing elements (load-bearing elements of external layer);
$V$ - space between internal and external layers of wall of sealed evacuated tunnel;
$N$ - load-bearing elements of intermediate layer of wall of sealed evacuated tunnel;
$D$, m - outer diameter of sealed evacuated tunnel;
$L$, m - distance between adjacent annular frames in their column;
$h_0$, m - thickness of intermediate layer of wall of sealed evacuated tunnel;
$h_1$, m - thickness of internal layer of wall of sealed evacuated tunnel;
$h_2$, m - thickness of external layer of wall of sealed evacuated tunnel;
$d_0$, m - diameter of load-bearing elements of internal and external layers of wall of sealed evacuated tunnel;
$\delta$, m - gap between load-bearing elements of internal and external layers of wall of sealed evacuated tunnel.

**Embodiments of invention**

Method of manufacturing of superspeed transport complex by Yunitski involves installing on foundation 1 of supports 2 (of anchor 2*a* and intermediate 2*b* types), arrangement and fastening in spans 3 between supports 2 of, at least one prestressed by tensioning in longitudinal direction, trussed overpass 4 (see Figs.1, 2, 4 -7), embodied as longitudinal trussed 5 track structure of string type with upper 5.1 and lower 5.2 chords of trussed track structure (see Figs.1- 7 and 9) for self-powered 6 vehicle (of mounted 6.1 or suspended 6.2 types, correspondingly).

Depending on the properties of foundation 1, place of installation and set of functions, supports 2 may have different design - in the form of towers, buildings, steel and reinforced concrete columnar and carcass / frame constructs and structures.

Depending on the design option and required technical parameters, trussed overpasses 4 are installed in spans 3 between supports 2, representing any of the known trussed structures, the common feature of which is, in different embodiments, that they are the principal structural elements of the trussed 5 string-type track structure with increased rigidity and specific carrying capacity.

Thanks to the fact that, according to the proposed method, preliminary spanning 3 (according to the process of manufacturing of transport complex) is carried out, with truss overpasses 4 made in the form of longitudinal trussed 5 string-type track structure for self-powered 6 vehicle; it becomes possible to provide high-tech possibilities to create large-sized structure of superspeed transport complex in difficult conditions, since at this stage, to manufacture such large-sized structure, trussed overpass 4 with trussed 5 string-type track structure is used as "mounting equipment" for installation of components, and if necessary, of personnel, too, directly to the assembly site of the principal elements of the superspeed transport complex.

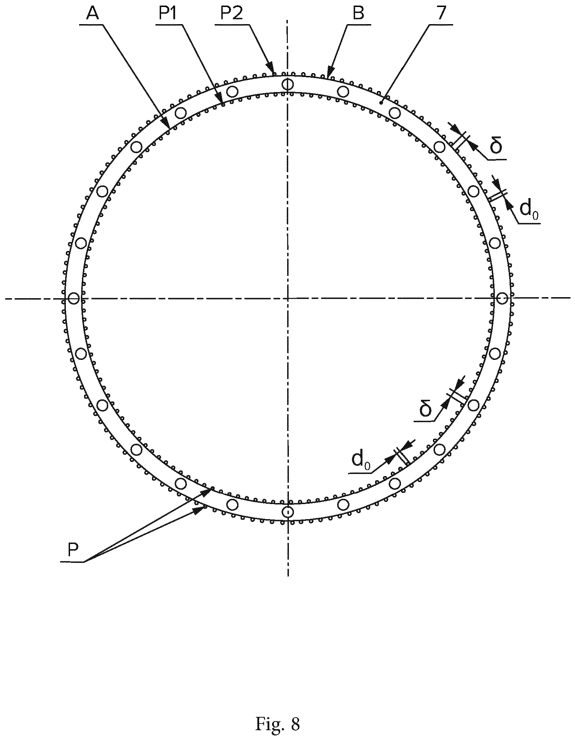

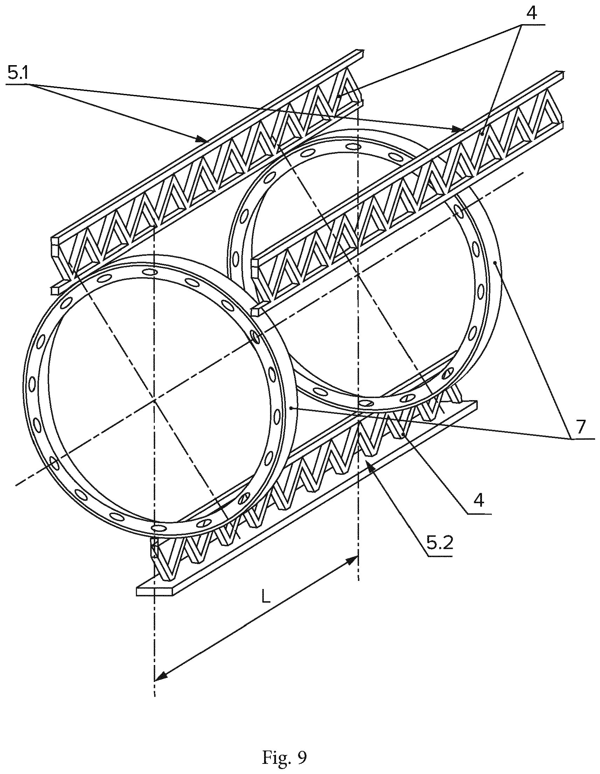

A further process of manufacturing of the claimed transport complex according to the present invention involves forming and fastening, on at least one trussed overpass 4, transversely to the trussed 5 track structure, of the annular frames 7 (see Figs.8 and 9).

The annular frames 7 are fixed on the trussed 5 track structure by any of the known techniques, for example, by welding.

After that, on the inner *A* and outer *B* surfaces of the annular frames 7 (see Fig.8), the internal *P1* and external *P2* rows, respectively, of the load-bearing elements *P*, are arranged and fixed, with their subsequent stretching in longitudinal direction to the calculated force.

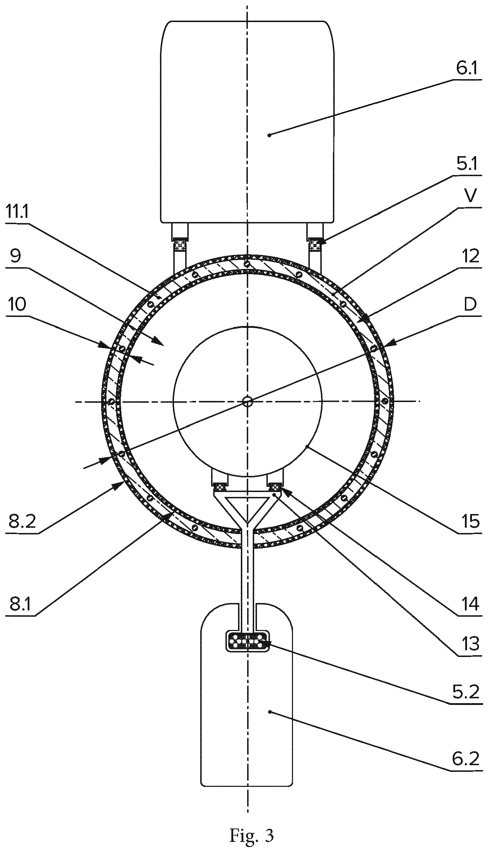

Alternative embodiments of the present invention are possible by forming two or more columns of annular frames 7 (not shown) on one or more trussed overpasses 4 (see Figs. 3 - 7).

In any of the non-limiting embodiments of the proposed transport complex, at the next process stage, internal 8.1 and external 8.2 layers of the sealed evacuated tunnel 9 are formed with annular cross-section profile of its wall 10. Moreover, the internal 8.1 and external 8.2 layers of the sealed evacuated tunnel 9 are formed of hardening composition 11, for example, polymer.

The internal 8.1 and external 8.2 layers of the sealed evacuated tunnel 9 are formed by, for example, by spraying or extruding the hardening composition 11 onto the internal *P1* and external *P2* rows of the load-bearing elements *P*, respectively.

The internal 8.1 and external 8.2 layers, according to the design option, may be made of hardening composition 11, for example polyurethane, and/or polyurea, and/or polyetheretherketone, and/or combinations thereof, which improve physical and operational characteristics of the transport complex.

During practical implementation of the subsequent stage of the manufacturing process of the proposed transport complex, the space *V*, formed between the internal 8.1 and external 8.2 layers of the wall 10 of the sealed evacuated tunnel 9, is filled with the hardening material 11.1 of the intermediate 12 layer (see Figs.3, 10 -12).

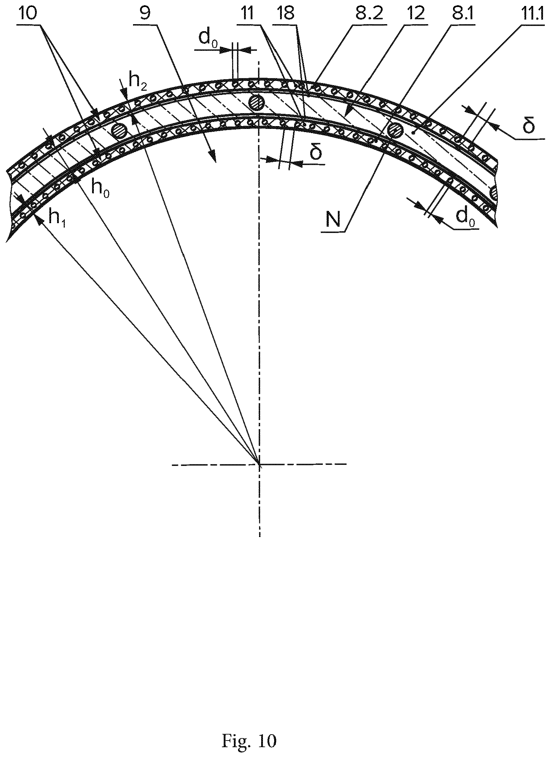

Alternatively, depending on the design option and the required technical parameters, the hardening material 11.1 of the intermediate 12 layer is made containing load-bearing elements *N* of the intermediate layer 12, prestressed by tensioning in longitudinal direction and fastened on the annular frames 7 (see Figs. 10 - 12), which provides a significant increase in rigidity and specific bearing capacity, with improved physical and operational characteristics of the transport complex.

The above-mentioned load-bearing elements *P* and *N*, respectively, of the internal 8.1 and external 8.2, as well as intermediate 12 layers of the wall 10 of the sealed evacuated tunnel 9, tensioned in longitudinal direction, can be made in the form of twisted and/or non-twisted ropes, cables, wires, bands and/or other extended elements of any durable materials.

Most preferably, concrete is used as the hardening material 11.1 of the intermediate layer 12. Hardening material 11.1 in the form of reinforced prestressed concrete ensures, at its low cost, an increase in the rigidity of the structure and the specific bearing capacity of the tunneled 14 track structure as a whole. In addition, special concrete has high armor protection and bulletproof quality.

It is also advisable that polymer concrete and/or foam concrete be used as the hardening material 11.1 of the intermediate layer 12, which will facilitate the construction of the track structure of the transport complex while maintaining its operational characteristics.

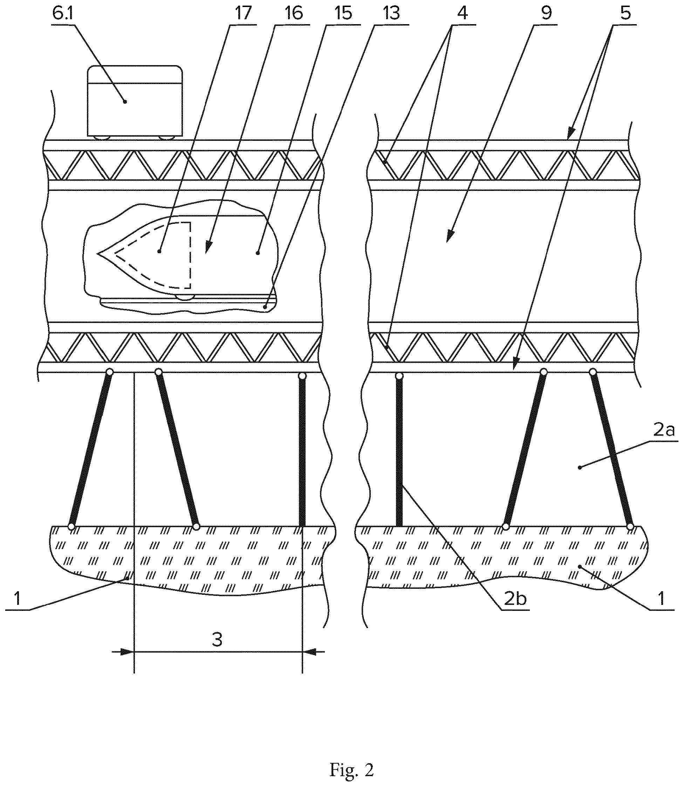

Common for all cases of practical implementation of the proposed transport complex is that on the internal 8.1 layer of the wall 10 of the sealed evacuated tunnel 9, at least one rail cord 13 of the tunneled 14 track structure for superspeed 15 vehicle is placed prestressed in longitudinal direction (see Figs.2, 3), comprising body 16 with power unit 17 (see Fig.2).

Alternatively, in the tunneled 14 track structure, according to the design option, two or more (not shown on Figures) rail cords 13 for superspeed 15 vehicles may be provided.

According to any of the non-limiting embodiments of the present invention, alternatively, depending on the design option and required technical parameters, polymeric binders or cement mixtures with the addition of corrosion inhibitors, plasticizers and other additives may be used as hardening material 11.1 of the intermediate layer 12, thereby providing a long protection period for load-bearing elements $N$ (see Figs.10 - 13) of the intermediate layer 12 against corrosion and mechanical damage.

Hardening material 11.1 of intermediate layer 12 of sealed evacuated tunnel 9 and hardening materials (not shown on Figures) of the relevant load-bearing constructs of trussed 5 track structure of string type and rail cord 13 of tunneled 14 track structure, depending on design parameters of the corresponding parts of the specified track structures and technical feasibility, can be of the same appearance and type and possess identical composition, or of the different appearance and type and/or possess different composition.

At the same time, the hardening materials of the load-bearing constructs of the trussed 5 track structure of string-type and the rail cord 13 of the tunneled 14 track structure can be made of a material of the same kind and type and have the same composition, or - of materials of different type and/or have different composition with hardening compositions 11 of internal 8.1 and external 8.2 layers of wall 10 of sealed evacuated tunnel 9.

As a result, due to the unification of the materials used, an increase in the processability and efficiency of the manufacturing process of the superspeed transport complex is achieved.

Additionally, in order to increase reliability and rigidity of the sealed evacuated tunnel 9, it is advisable to bind the adjacent layers of its wall 10 to each other in the transverse direction along its entire length. For this purpose, according to the design option, reinforcing shells 18, for example in the form of respective sleeves, or bands, for example of fiberglass fabric, may be fixed on the outer surface of the internal 8.1 layer and the inner surface of the external 8.2 layer of the wall 10 (see Figs. 10 - 12). These reinforcing shells 18 are designed to occupy the boundary portions of the space $V$ of the intermediate 12 layer and to be impregnated with the hardening material 11.1 of that intermediate 12 layer during the finishing operation of forming the wall 10 of the sealed evacuated tunnel 9.

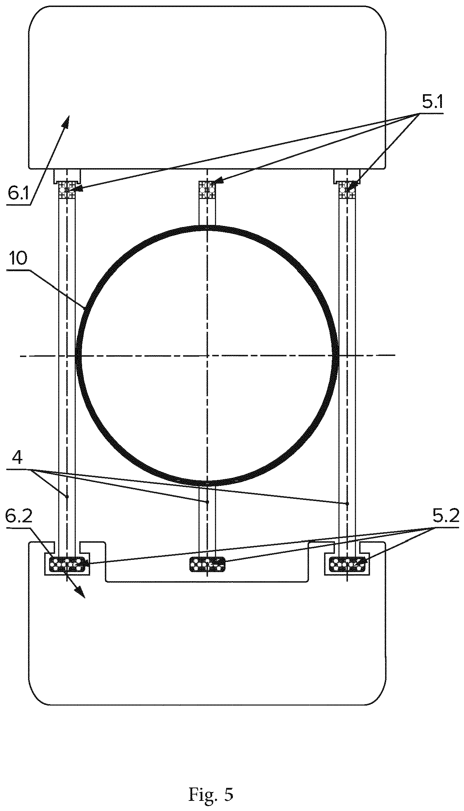

An alternative embodiment of the method of manufacturing of superspeed transport complex is forming and fastening on trussed overpass 4 of several (two or more) columns of annular frames 7 (not shown on Figures), as well as placement in spans 3 between supports 2 of two, three, four, or more trussed overpasses 4 (see Figs. 1, 3 and 7), shaping both the required number of trussed 5 track structures of string-type for self-powered 6 vehicles and the required number of tunneled 14 track structures for superspeed 15 vehicles, along which the respective vehicles can be driven by any of the known types of drive. Such embodiment makes it possible to significantly increase the performance (capacity) of both superspeed transport complex in various directions of traffic, including oncoming, and of its trussed 5 track structures (their upper 5.1 and lower 5.2 chords) due to the combined use, respectively, of mounted 6.1 and suspended 6.2 self-powered vehicles of various modifications and sizes (see Figs.5 - 7).

Hereby, the essence of the process of manufacturing of transport complex, with the number of both trussed 5 and tunneled 14 track structures different from one, corresponds to the above-described stages of the process of manufacturing of superspeed transport complex.

It is advisable that power unit 17 of superspeed 15 vehicle (as well as the self-powered 6 vehicle) represents an engine of any of the known types, for example, an engine of rotation, a flywheel accumulator of mechanical energy (such as a gyroscope), a linear electric motor, a propeller, a gas turbine, or in the form of their combinations, with appropriate operation life support and drive systems for driving (traction) wheels.

In the current state of the art, it is most preferred that the power unit 17 would be an electric motor in the form of a motor wheel (not shown on Figures).

Thanks to the use of high-tech ingredients and components in the form of mixtures, bulk, roll and/or similar materials in the creation of the tunneled 14 structure of the superspeed transport complex, the manufacturing of the superspeed transport complex can be carried out using a special small-sized construction combine / road header (not shown on Figures), which can be installed, for the period of construction, on one and/or several trussed 5 track structures instead of the corresponding self-powered 6 vehicles stipulated by the design option, which significantly improves the processability of manufacturing process of this complex.

At the same time, in the process of forming the tunneled 14 track structure, the combine simulates the natural load on the trussed overpasses 4, which allows to take into consideration the deformation thereof and to ensure the required straightforwardness of the tunneled 14 track structure of the superspeed transport complex created thereby.

The combine, moving along the route along trussed overpasses 4, provides for the tunneled 14 track structures for superspeed 15 vehicles mounted according to the design option.

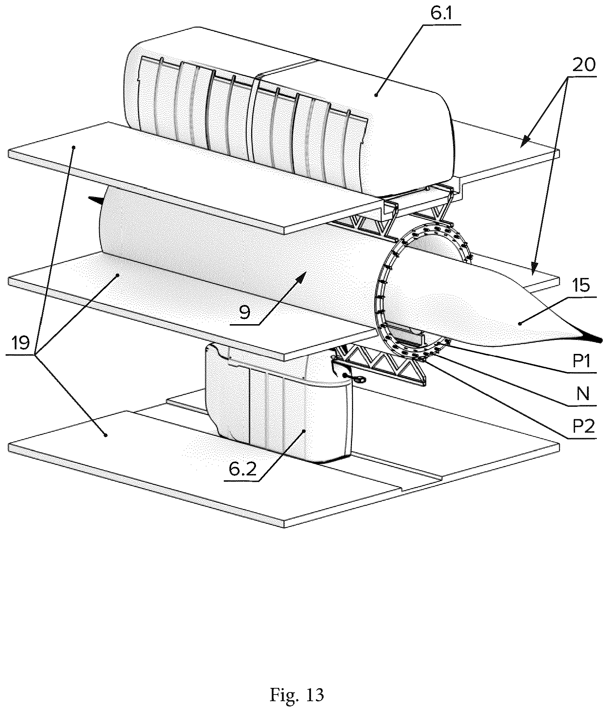

In the final stage of manufacturing of superspeed transport system, the track structures (longitudinal trussed 5 track structure of string type for self-powered 6 vehicle, and tunneled 14 track structure for superspeed 15 vehicle), according to the design option, are equipped with stations 19 with respective boarding platforms 20 (see Fig.13). Buildings, or various structures can be used ss stations, including train stations, anchor supports and/or other building structures.

At stations 19, it is advisable to equip the sealed evacuated tunnel 9 of the tunneled 14 track structure for superspeed 15 vehicle with gates (not shown on Figures).

For a specialist skilled in the art, it is understood that the presented idea of the claimed invention allows the use of a plurality of combinations of embodiments of the proposed method of manufacturing of superspeed transport system within different, non-exclusive combinations of all the above-mentioned embodiments.

The superspeed transport complex by Yunitski implemented according to the above described method as per present invention, comprises at least one trussed 5 track structure of string type (see Figs. 1 and 2), installed on supports 2 (anchor 2*a* and intermediate 2*b* types, mounted from soil and distributed along foundation 1), and fastened in spans 3 between these supports 2. Trussed 5 track structure of string type is made in the form of trussed overpass 4, prestressed by tensioning in longitudinal direction. The trussed overpass 4, together with the trussed 5 track structure of string type, is provided with a self-powered 6 vehicle (mounted 6.1 or suspended 6.2), as shown on Figs. 1, 3, 5 - 7 and 13.

The structures of trussed overpasses 4 in spans 3 may be different depending on the terrain, design parameters and engineering viability / technical feasibility.

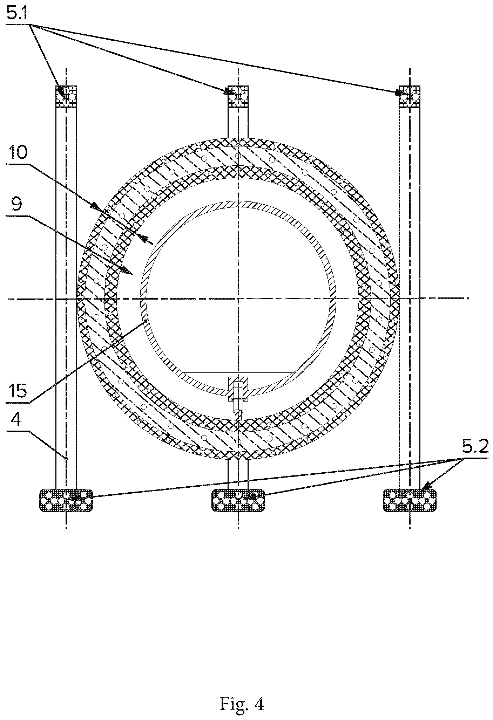

It is advisable to position trussed overpasses 4 in spans 3 in the quantity from one to six (depending on the length of spans 3 and design parameters of the transport complex), as shown, for example, on Fig. 4.

On Fig. 1, a layout view of superspeed transport complex with two trussed overpasses 4 and, accordingly, two trussed 5 track structures of string type, is shown.

Figs. 3 and 9 illustrate layout views of superspeed transport complex with three trussed overpasses 4.

When implementing six trussed overpasses 4 in spans 3, an additional economic effect is achieved (see Figs. 4 - 7), which occurs by combining and sharing in use of mounted 6.1 and suspended 6.2 self-powered vehicles of various dimensions (see Figs. 5 - 7), from the largest to the smallest sizes, with their various combinations, and, as a result, more intensive operation of the transport complex.

The structure of the proposed transport complex provides for the formation and fixation on at least one trussed overpass 4, transversely to the trussed 5 track structure, of annular frames 7, located at least in one column (see Fig. 9). On the inner *A* and outer *B* surfaces of the annular frames 7, arranged and fastened are, respectively, the internal *P1* and external *P2* rows of load-bearing elements *P*, which are subsequently stressed by tensioning in longitudinal direction (see Fig. 8).

In a limit embodiment (not shown on Figures) of the arrangement according to the invention, one trussed 5 string track structure of overpass type is connected to one tunneled 14 track structure including a sealed evacuated tunnel 9 with an annular cross-sectional profile of its wall 10 consisting of internal 8.1, external 8.2 and intermediate 12 layers.

Hereby, annular frames 7 are positioned from each other at the distance *L*, m, defined by the dependence:

$$0.1 \leq L/D \leq 5, \qquad (1)$$

where *D*, m - outer diameter of the sealed evacuated tunnel.

With the arrangement of the annular frames 7 at distance *L*, m, from each other, indicated in the dependence (1), it is possible to simply ensure the required rigidity and strength of the arrangement of the tunneled 14 track structure and optimize its materials intensity.

If the ratio (1) is less than 0.1, then there is an unjustified overspending of structural materials and, as a result, - an increase in the cost of the track structure.

If the ratio (1) is more than 5, it becomes problematic to ensure the required rigidity and straightness of the arrangement of the tunneled 14 track structure.

Hereby, annular frames 7 of wall 10 of sealed evacuated tunnel 9 are connected with each of its layers (internal 8.1, external 8.2 and intermediate 12), and, together with the respective rows *P1* and *P2* of load-bearing elements *P* and load-bearing elements *N* of intermediate 12 layer of wall 10 of sealed evacuated tunnel 9, are forming the reinforced carcass of tunneled 14 track structure.

Fixing of internal *P1* and external *P2* rows of load-bearing elements *P* on annular frames 7, as well as of load-bearing elements *N* of the intermediate 12 layer, can be performed in any known way, for example, by gluing, or kinematic locking (not shown on Figures), for example, by wedging in the corresponding holes (and/or slots).

By applying polymer hardening composition 11 onto the internal *P1* and external *P2* rows of load-bearing elements *P*, the internal 8.1 and external 8.2 reinforced monolithic layers of the wall 10 of the sealed evacuated tunnel 9 are formed, between which appears space *V* for the hardening material 11.1 of the intermediate 12 layer.

As the hardening composition 11, for example, polyurethane, and/or polyurea, and/or polyetheretherketone, and/or combinations thereof are used, which ensures the durability of the structure and high processability of the manufacturing process of the claimed transport complex.

The formed space *V* of the intermediate 12 layer is thereby filled with the hardening material 11.1.

As hardening material 11.1, concrete is preferably used to fill the space *V* of the intermediate 12 layer. This will ensure the required strength, safety and rigidity of the wall 10 of the sealed evacuated tunnel 9, with high processability of the manufacturing process of the tunneled 14 track structure and optimized costs.

Alternatively, as the hardening material 11.1 of the intermediate 12 layer, it is advantageous to use, for example, polymer concrete and/or foam concrete, which will facilitate the construction of the track structure of the transport complex while maintaining its field performance.

Improvements in operational characteristics of the intermediate layer 12 and the sealed evacuated tunnel 9 as a whole are ensured, as noted above, by reinforcing its volume with load-bearing elements $N$.

Hereby, the internal 8.1 and external 8.2 layers of wall 10 of sealed evacuated tunnel 9 are made with thicknesses, respectively, $h_1$, m, and $h_2$, m, defined by the ratios:

$$0.01 \leq h_1/h_0 \leq 0.1, \qquad (2)$$

$$0.01 \leq h_2/h_0 \leq 0.1 \qquad (3)$$

When making the internal 8.1 and external 8.2 layers of the wall 10 with thicknesses $h_1$, m, and $h_2$, m, respectively, indicated in dependencies (2) and (3), it is possible to simply provide the required strength with a minimum materials intensity of their design (see Figs. 10 - 12).

If the ratios (2) and (3) are less than 0.01, then it is difficult to guarantee the rigidity stipulated by the design option, as well as durability and shape of the internal 8.1 and external 8.2 layers and wall 10 of the sealed evacuated tunnel 9 in general, at the subsequent filling with the hardening material 11.1 of the space $V$ of the intermediate 12 layer formed therebetween.

If the ratios (2) and (3) are more than 0.1, then there is an unjustified overrun of structural materials (including hardening composition 11) and, as a result, - an increase in the cost of the track structure.

At the same time, the load-bearing elements $P$ of the internal 8.1 and external 8.2 layers of the wall 10 of the sealed evacuated tunnel 9 are made (see Figs. 10 - 12) with a diameter, $d_0$, m, defined by the ratios:

$$0.25 \leq d_0/h_1 \leq 0.95, \qquad (4)$$

$$0.25 \leq d_0/h_2 \leq 0.95 \qquad (5)$$

When implementing load-bearing elements P of the internal 8.1 and external 8.2 layers of the wall 10 with diameter, $d_0$, m, indicated respectively in ratios (4) and (5), it is possible to quite simply ensure the required strength and geometry thereof.

If the ratios (4) and (5) are less than 0.25, it is difficult to ensure the required rigidity, strength and shape of the internal 8.1 and external 8.2 layers and the wall 10 of the sealed evacuated tunnel 9 as a whole, when the space $V$ of the intermediate 12 layer formed therebetween is subsequently filled with hardening material 11.1.

If the ratios (4) and (5) are more than 0.95, then there is an unjustified overrun of structural materials (including load-bearing elements $P$) and, as a result, an increase in the cost of the track structure.

Hereby, the adjacent load-bearing elements $P$ of the internal 8.1 and external 8.2 layers of wall 10 of the sealed evacuated tunnel 9 are positioned (see Figs. 10 - 12) between each other with gap $\delta$, m, defined by the ratio:

$$0 \leq \delta/d_0 \leq 5 \qquad (6)$$

The ratio (6) cannot be less than 0, since the gap cannot be negative.

If the ratio (6) is more than 5, the significant thickness of the hardening composition 11 in the gap $\delta$, m, between adjacent load-bearing elements 6 will not provide the required strength, bearing capacity and geometry of internal 8.1 and external 8.2 layers of wall 10 of sealed evacuated tunnel 9 at subsequent filling with hardening material 11.1 of space $V$ of the intermediate 12 layer formed between the said boundary layers (8.1 and 8.2).

Hereby, the intermediate layer 12 of wall 10 of sealed evacuated tunnel 9 is made with thickness $h_0$, m, defined by the ratio:

$$0.025 \leq h_0/D \leq 0.25 \qquad (7)$$

When making the intermediate 12 layer of the wall 10 of the sealed evacuated tunnel 9 with thickness $h_0$, m, indicated in ratio (7), it is possible to simply ensure the required rigidity and strength of the arrangement of the tunneled 14 track structure with its minimum material capacity (see Fig.10).

If the ratio (7) is less than 0.1, then there is an unjustified overspending of structural materials and, as a result, an increase in the cost of the track structure.

If the ratio (7) is more than 2.5, it becomes problematic to ensure the required rigidity and straightness of the arrangement of the tunneled 14 track structure.

Common for all load-bearing elements in different embodiments is that, for load-bearing structures of such elements of the transport complex, like: trussed 5 track structure of string type, and/or rail cord 13 of tunneled 14 track structure, and/or load-bearing elements $P$ of internal 8.1 and external 8.2 layers, and/or load-bearing elements of intermediate 12 layer, - the following reinforcing elements can be used: high-strength steel wire, or twisted or untwisted steel ropes, as well as cords, strands, bands, tubes or other extended elements made of known high-strength materials in any combination thereof.

As noted above, in an alternative embodiment, depending on the requirements of the design option, reinforcing shells 18 may be fastened to the outer surface of the internal 8.1 layer and the inner surface of the external 8.2 layer (see Figs. 10 - 12). Those reinforcing shells 18 are configured so that they are immersed in both the internal 8.1 and external 8.2 layers of the wall 10 by the hardening composition 11 and in the intermediate 12 layer thereof by the respective hardening material 11.1 along the entire length of the sealed evacuated tunnel 9.

On the internal 8.1 layer of the wall 10 of the sealed evacuated tunnel 9, positioned is at least one prestressed in longitudinal direction rail cord 13 of the tunneled 14 track structure for the superspeed 15 vehicle (see Figs. 2 and 3).

Alternatively, in the tunneled 14 track structure, according to the design option, two or more rail cords 13 may be provided for superspeed 15 vehicle (not shown on Figures).

The superspeed 15 vehicle comprises body 16 with power unit 17, ensuring sealing of the cabin during movement (see Fig. 2).

In accordance with the design option, trussed 5 and tunneled 14 track structures are equipped with stations 19 with boarding platforms 20 (see Fig. 13). As stations, buildings, or various structures can be used, including train stations, anchor supports and/or other building structures.

According to the author's design, when implementing the proposed technical approach, at least one trussed 5 string track structure of overpass type provides for, at the stage of operation of the superspeed transport complex, the functioning of the self-powered 6 vehicle (mounted 6.1, or suspended 6.2), and at the stage of construction - the assembling of sealed evacuated tunnel 9 of the tunneled 14 track structure of the superspeed 15 vehicle.

Alternatively, in accordance with the design option, the trussed overpasses, after installation of the tunneled 14 track structure, can be dismantled, which will save up materials and, as a result, reduce the cost of the transport complex as a whole.

**Industrial applicability**

Construction of the superspeed transport complex by Yunitski according to the present invention is carried out by the following technological operations.

Supports 2 (anchor 2a and intermediate 2b) are installed on bases prepared on foundation 1 from soil. Load-bearing member of the trussed 5 track structure is suspended on the supports 2 and stretched therebetween with subsequent fastening of the ends of the load-bearing elements in the anchor supports 2a. Then trussed overpass 4 in form of longitudinal trussed 5 string-type track structure for self-powered 6 vehicle is mounted on load-bearing member in spans 3 between supports 2.

After assembly, along the length of the entire track of at least one trussed 4 overpass prestressed by tensioning in longitudinal direction, the technological equipment is placed on its trussed 5 string-type track structure for the manufacture of the tunneled 14 track structure (for example, a special construction combine).

The subsequent stage of the manufacturing process involves the formation and fastening of annular frames 7, for example - by welding on trussed 5 track structure. Following that, on inner A and outer B surfaces of annular frames 7, internal P1 and external P2 rows, respectively, of load-bearing elements P are installed and fixed, tensioned between anchor 2a supports, and via special through holes in annular frames 7, the load-bearing elements N of the intermediate layer 12 of the tunneled 14 track structure are inserted and fixed in pretensioned state between the same anchor supports 2a. As a result, a reinforced carcass of the tunneled 14 structure is formed. On the basis of the obtained carcass, the internal 8.1 and the external 8.2 layers of the wall 10 of the sealed evacuated tunnel 9 are first formed, and then its intermediate 12 layer is formed by applying hardening compositions 11 and hardening material 11.1 on the corresponding areas of the obtained carcass, into the space V formed between the internal and external layers of the wall of the sealed evacuated tunnel 9.

Rail cord 13 of tunneled 14 track structure is fixed in shaped hermetically evacuated tunnel 9, whereon superspeed 15 vehicle is installed.

At the final stage, the transport complex is equipped with stations 19 and boarding platforms 20, and corresponding self-powered 6 vehicles are installed on trussed 5 track structures.

While the description and figures show preferred embodiments of the inventive method of manufacturing and arrangement of superspeed transport complex, it is clear that the invention is not limited thereto only and can be implemented in various embodiments using other known techniques and structural elements within the scope of said plurality of essential features of the invention; which can be changed, modified and supplemented within the scope defined by the claims and the submitted materials of the application for invention.

The proposed invention is industrially applicable since the superspeed transport complex can be realized under real conditions using standard equipment, modern materials and technologies.

The proposed method of manufacturing and arrangement of superspeed transport complex by Yunitski make it possible to ensure: increase of technological effectiveness of the manufacturing process and design of the superspeed transport complex as a whole; increase of specific bearing capacity of track structures; improvement of operational and technical characteristics of the transport complex; improving the rigidity of the structure, as well as the flatness of the rail track.

Information sources

1. Internet page: https://ru.wikipedia.org/wiki/Meтрополитен_(значения) - as of 28.01.2019.

2. Patent RU 2252881, IPC B60L13/10, B60V3/02, publ. 27.05.2005.

3. Patent RU 2109647, IPC B61B13/10, publ. 27.04.1998.

4. Internet page: https://ru.wikipedia.org/wiki/Hyper loop - as of 28.01.2019.

5. Patent RU 2288398, IPC F16L9/14, publ. 27.11.2006.

6. Patent RU 2503560, IPC B61B1/00, 13/10, publ. 10.01.2014.

7. Internet page: http://wiki-org.ru/wiki/Peaктивный_поезд - as of 28.01.2019.

8. Patent RU 2271291, IPC B61B5/02, E01B2/00, publ. 10.03.2006.

9. Yunitski A.E. String transport systems: on Earth and in space. Monograph, 1995, Gomel, - 337 p. with.: ill.: 629.1.072.2:629.7.087.22, Pp.10, 11, 16 and 17, Figs.1.12, 1.13 and 2.1. (Prototype)

**Claims**

1. Method of manufacturing of superspeed transport complex, including installing supports (2) on a foundation (1);

    making and fastening in spans (3) between the supports (2) of at least one overpass (4), which is prestressed by tensioning in longitudinal direction, in the form of a longitudinal track structure of string type for self-powered vehicle (6);
    forming and fixing of annular frames (7) on the overpass (4) transversely to track structure;
    arranging and fixing of internal and external rows of load-bearing elements (P), which are tensioned in longitudinal direction, on inner and outer surfaces of the annular frames (7), respectively;
    **characterized in that**
    the at least one overpass (4) forming
    the longitudinal track structure is trussed and
    **characterized by**
    forming of internal and external layers (8.1, 8.2) of at least one sealed evacuated tunnel (9) with annular cross-section profile of its wall (10), made of hardening composition, by applying it on the internal and external rows of load-bearing elements (P) respectively and filling the space between the formed internal and external layers (8.1, 8.2) of the sealed evacuated tunnel (9) with the hardening material of the intermediate layer, whereas on the internal layer (8.1) of the wall (10) of the sealed evacuated tunnel (9), a prestressed by tensioning in longitudinal direction at least one rail cord (13) is positioned, of a tunneled track structure for superspeed vehicle, containing body with power unit providing sealing of cabin during movement.

2. Superspeed transport complex, manufactured by the method according to claim 1, which includes mounted in spans (3) between supports (2), located on the foundation (1), at least one trussed string track structure of overpass type; with at least one self-powered vehicle (6) mounted thereon; connected to at least one tunneled track structure including a sealed evacuated tunnel (9) with an annular cross-section profile of its wall (10); consisting of internal, external and intermediate layers (8.1., 8.2, 12), and at least one rail cord (13) located in sealed evacuated tunnel (9), intended for superspeed vehicle with a body providing sealing of the cabin during movement and a power unit, wherein the wall (10) of the sealed evacuated tunnel (9) is equipped with annular frames (7) connected to each of the layers of the wall (10); and its internal and external layers (8.1, 8.2) are made of hardening composition and reinforced with prestressed by tensioning in longitudinal direction corresponding load-bearing elements (P); which are fastened to the inner and outer surfaces of the annular frames (7), respectively; and wherein the intermediate layer (12) of the wall is made of a hardening material filling the space between the internal and external layers (8.1, 8.2) of the wall (10).

3. Superspeed transport complex according to claim 2, **characterized by** that the hardening material of the intermediate layer (12) of the wall of the sealed evacuated tunnel (9) contains load-bearing elements (P) of the intermediate layer (12) prestressed by tensioning in longitudinal direction up to the nominal design force and fastened on the annular frames (7).

4. Superspeed transport complex according to claim 3, **characterized by** that concrete is used as hardening material of the intermediate layer (12) of the wall (10) of the sealed evacuated tunnel (9).

5. Superspeed transport complex according to claim 2, **characterized by** that the internal and external layers (8.1, 8.2) of the wall (10) of the sealed evacuated tunnel (9) are made of reinforced polymer hardening composition in the form of polyurethane, and/or polyurea, and/or polyetheretherketone, and/or combinations thereof.

6. Superspeed transport complex according to claim 2, **characterized by** that the annular frames (7) are positioned from each other at the distance L, m, defined by the dependence:

$$0.1 \leq L/D \leq 5,$$

where D, m - outer diameter of the sealed evacuated tunnel (9).

7. Superspeed transport complex according to claim 2, **characterized by** *that* the intermediate layer (12) of the wall (10) of the sealed evacuated tunnel (9) is made with thickness $h_0$, m, defined by the ratio:

$$0.025 \leq h_0/D \leq 0.25$$

8. Superspeed transport complex according to claim 2, **characterized by** *that* the internal and external layers (8.1, 8.2) of the wall (10) of the sealed evacuated tunnel (9) are made with thicknesses, respectively, $h_1$, m, and $h_2$, m, defined by the ratios:

$$0.01 \leq h_1/h_0 \leq 0.1,$$

$$0.01 \leq h_2/h_0 \leq 0.1$$

9. Superspeed transport complex according to claim 2, **characterized by** *that* the load-bearing elements (P) of the internal and external layers (8.1, 8.2) of the wall (10) of the sealed evacuated tunnel (9) are made with diameter, $d_0$, m, defined by the ratios:

$$0.25 \leq d_0/h_1 \leq 0.95,$$

$$0.25 \leq d_0/h_2 \leq 0.95$$

10. Superspeed transport complex according to claim 9, **characterized by** *that* the adjacent load-bearing (P) elements of the internal and external layers (8.1, 8.2) of the wall (10) of the sealed evacuated tunnel (9) are positioned between each other with gap $\delta$, m, defined by the ratio:

$$0 \leq \delta/d_0 \leq 5$$

11. Superspeed transport complex according to claim 2, **characterized by** *that* the adjacent layers of the wall (10) of the sealed evacuated tunnel (9) are connected to each other in the transverse direction along their entire length.

**Patentansprüche**

1. Verfahren zur Fertigung eines Hochgeschwindigkeits-Transportkomplexes, wobei das Verfahren enthält:

ein Installieren von Trägern (2) auf einem Fundament (1);
ein Erstellen und Befestigen, in Spannweiten (3) zwischen den Trägern (2), mindestens einer Überführung (4), die durch ein Spannen in Längsrichtung vorgespannt ist, in der Form einer Längsgleisstruktur vom Strangtyp für ein selbstangetriebenes Fahrzeug (6);
ein Ausbilden und Befestigen von ringförmigen Rahmen (7) an der Überführung (4) quer zu der Gleisstruktur;
ein Anordnen und Befestigen von inneren und äußeren Reihen von lasttragenden Elementen (P), die in Längsrichtung gespannt sind, jeweilig an inneren und äußeren Flächen der ringförmigen Rahmen (7);
**dadurch gekennzeichnet, dass**
die mindestens eine Überführung (4), die die Längsgleisstruktur ausbildet, fachwerkartig ist; und
**gekennzeichnet durch**
ein Ausbilden von inneren und äußeren Schichten (8,1, 8,2) von mindestens einem abgedichteten evakuierten Tunnel (9), dessen Wand (10) ein ringförmiges Querschnittsprofil hat, die aus einer aushärtenden Zusammensetzung gefertigt ist, indem sie jeweilig auf die inneren und äußeren Reihen von lasttragenden Elementen (P) aufgebracht werden und der Raum zwischen den ausgebildeten inneren und äußeren Schichten (8,1, 8,2) des abgedichteten evakuierten Tunnels (9) mit dem aushärtenden Material der Zwischenschicht gefüllt wird, während auf der inneren Schicht (8,1) der Wand (10) des abgedichteten evakuierten Tunnels (9) ein durch ein Spannen in Längsrichtung vorgespanntes mindestens ein Schienenkabel (13) einer Gleisstruktur mit Tunnel für ein Hochgeschwindigkeitsfahrzeug, das eine Karosserie mit einer Antriebseinheit enthält, die ein Abdichten der Kabine während einer Bewegung bereitstellt, positioniert wird.

2. Hochgeschwindigkeits-Transportkomplex, der durch das Verfahren nach Anspruch 1 hergestellt ist, der wobei der Komplex, montiert in Spannweiten (3) zwischen Trägern (2), die auf dem Fundament (1) angeordnet sind, mindestens eine fachwerkartige Stranggleisstruktur eines Überführungstyps enthält; mit mindestens einem selbstangetriebenen Fahrzeug (6), das darauf montiert ist; verbunden mit mindestens einer Gleisstruktur mit Tunnel, die einen abgedichteten evakuierten Tunnel (9) enthält, dessen Wand (10) ein ringförmiges Querschnittsprofil hat; bestehend aus inneren Schichten, äußeren Schichten und Zwischenschichten (8,1, 8,2, 12) und mindestens einem Schienenkabel (13), das sich in dem abgedichteten evakuierten Tunnel (9) befindet, der für ein Hochgeschwindigkeitsfahrzeug mit einer Karosserie, die ein Abdichten der Kabine während einer Bewegung bereitstellt, und einer Antriebseinheit bestimmt ist, wobei die Wand (10) des abgedichteten evakuierten Tunnels (9) mit ringförmigen Rahmen (7) ausgestattet ist, die mit jeder der Schichten der Wand (10) verbunden sind; und dessen innere und äußere Schichten (8,1, 8,2) aus einer aushärtenden Zusammensetzung gefertigt sind und mit durch ein Spannen in Längsrichtung vorgespannten entsprechenden lasttragenden Elementen (P) verstärkt sind; die jeweilig an den inneren und äußeren Flächen der ringförmigen Rahmen (7) befestigt sind; und wobei die Zwischenschicht (12) der Wand aus einem aushärtenden Material gefertigt ist, das den Raum zwischen den inneren und äußeren Schichten (8,1, 8,2) der Wand (10) füllt.

3. Hochgeschwindigkeits-Transportkomplex nach Anspruch 2, *dadurch gekennzeichnet, dass* das aushärtende Material der Zwischenschicht (12) der Wand des abgedichteten evakuierten Tunnels (9) lasttragende Elemente (P) der Zwischenschicht (12) enthält, die durch ein Spannen in Längsrichtung bis zu der nominalen Konstruktionskraft vorgespannt sind und an den ringförmigen Rahmen (7) befestigt sind.

4. Hochgeschwindigkeits-Transportkomplex nach Anspruch 3, *dadurch gekennzeichnet, dass* Beton als das aushärtende Material der Zwischenschicht (12) der Wand (10) des abgedichteten evakuierten Tunnels (9) verwendet wird.

5. Hochgeschwindigkeits-Transportkomplex nach Anspruch 2, *dadurch gekennzeichnet, dass* die inneren und äußeren Schichten (8,1, 8,2) der Wand (10) des abgedichteten evakuierten Tunnels (9) aus einer verstärkten polymeren aushärtenden Zusammensetzung in der Form von Polyurethan und/oder Polyharnstoff und/oder Polyetheretherketon und/oder Kombinationen aus diesen gefertigt sind.

6. Hochgeschwindigkeits-Transportkomplex nach Anspruch 2, *dadurch gekennzeichnet, dass* die ringförmigen Rahmen (7) voneinander in dem Abstand L [m] positioniert sind, der durch die folgende Abhängigkeit definiert ist:

$$0,1 \leq L/D \leq 5,$$

wobei $D$ [m] der Außendurchmesser des abgedichteten evakuierten Tunnels (9) ist.

7. Hochgeschwindigkeits-Transportkomplex nach Anspruch 2, *dadurch gekennzeichnet, dass* die Zwischenschicht (12) der Wand (10) des abgedichteten evakuierten Tunnels (9) mit einer Dicke $h_0$ [m] gefertigt ist, die durch das folgende Verhältnis definiert ist:

$$0,025 \leq h_0/D \leq 0,25.$$

8. Hochgeschwindigkeits-Transportkomplex nach Anspruch 2, *dadurch gekennzeichnet, dass* die inneren und äußeren Schichten (8,1, 8,2) der Wand (10) des abgedichteten evakuierten Tunnels (9) mit jeweiligen Dicken $h_1$ [m] und $h_2$ [m] gefertigt sind, die durch die folgenden Verhältnisse definiert sind:

$$0,01 \leq h_1/h_0 \leq 0,1,$$

$$0,01 \leq h_2/h_0 \leq 0,1.$$

9. Hochgeschwindigkeits-Transportkomplex nach Anspruch 2, *dadurch gekennzeichnet, dass* die lasttragenden Elemente (P) der inneren und äußeren Schichten (8,1, 8,2) der Wand (10) des abgedichteten evakuierten Tunnels (9) mit einem Durchmesser $d_0$ [m] gefertigt sind, der durch die folgenden Verhältnisse definiert ist:

$$0,25 \leq d_0/h_1 \leq 0,95,$$

$$0,25 \leq d_0/h_2 \leq 0,95.$$

10. Hochgeschwindigkeits-Transportkomplex nach Anspruch 9, *dadurch gekennzeichnet, dass* die benachbarten lasttragenden Elemente (P) der inneren und äußeren Schichten (8,1, 8,2) der Wand (10) des abgedichteten evakuierten Tunnels (9) mit einem Spalt $\delta$ [m] zwischen einander positioniert sind, der durch das folgende Verhältnis definiert ist:

$$0 \leq \delta/d_0 \leq 5.$$

11. Hochgeschwindigkeits-Transportkomplex nach Anspruch 2, *dadurch gekennzeichnet, dass* die benachbarten Schichten der Wand (10) des abgedichteten evakuierten Tunnels (9) in der Querrichtung entlang ihrer gesamten Länge miteinander verbunden sind.

**Revendications**

1. Procédé de fabrication d'un complexe de transport à très grande vitesse, incluant l'installation de supports (2) sur une fondation (1) ;

la création et l'assujettissement de travées (3) entre les supports (2) d'au moins un passage supérieur (4), qui est précontraint par mise en tension en sens longitudinal, sous la forme d'une structure de voie longitudinale de type tronçon pour véhicule automoteur (6) ;

la formation et la fixation d'ossatures annulaires (7) sur le passage supérieur (4) transversalement à la structure de voie ;

l'agencement et la fixation de rangées internes et externes d'éléments porteurs (P), qui sont mis en tension en sens longitudinal, sur des surfaces intérieures et extérieures des ossatures annulaires (7), respectivement ;

**caractérisé en ce que**

le au moins un passage supérieur (4) formant la structure de voie longitudinale est armé et **caractérisé par**

la formation de couches interne et externe (8.1, 8.2) d'au moins un tunnel sous vide hermétique (9) avec profil de section annulaire de sa paroi (10), composées d'une composition durcissable, en l'appliquant sur les rangées internes et externes d'éléments porteurs (P) respectivement et en remplissant l'espace entre les couches interne et externe (8.1, 8.2) formées du tunnel sous vide hermétique (9) avec le matériau durcissable de la couche intermédiaire,

alors que, sur la couche interne (8.1) de la paroi (10) du tunnel sous vide hermétique (9), est positionné au moins un câble de rail (13) précontraint par mise en tension en sens longitudinal, d'une structure de voie creusée en tunnel pour véhicule à très grande vitesse, contenant un corps avec groupe motopropulseur assurant l'herméticité de cabine durant le déplacement.

2. Complexe de transport à très grande vitesse, fabriqué par le procédé selon la revendication 1, qui inclut, monté dans des travées (3) entre des supports (2), situés sur la fondation (1), au moins une structure de voie à tronçon armé de type passage supérieur ; avec au moins un véhicule automoteur (6) monté sur celle-ci ; relié à au moins une structure de voie creusée incluant un tunnel sous vide hermétique (9) avec un profil de section transversale annulaire de sa paroi (10) ; constitué de couches interne, externe, et intermédiaire (8.1., 8.2, 12), et au moins un câble de rail (13) situé dans le tunnel sous vide hermétique (9), prévu pour véhicule à très grande vitesse avec un corps assurant l'herméticité de la cabine durant le déplacement et un groupe motopropulseur, dans lequel la paroi (10) du tunnel sous vide hermétique (9) est équipée d'ossatures annulaires (7) reliées à chacune des couches de la paroi (10) ; et ses couches interne et externe (8.1, 8.2) sont composées d'une composition durcissable et renforcées par des éléments porteurs (P) correspondants précontraints par mise en tension en sens longitudinal ; qui sont fixés aux surfaces interne et externe des ossatures annulaires (7), respectivement ; et dans lequel la couche intermédiaire (12) de la paroi est composée d'un matériau durcissable remplissant l'espace entre les couches interne et externe (8.1, 8.2) de la paroi (10).

3. Complexe de transport à très grande vitesse selon la revendication 2, **caractérisé en ce que** le matériau durcissable de la couche intermédiaire (12) de la paroi du tunnel sous vide hermétique (9) contient des éléments porteurs (P) de la couche intermédiaire (12) précontraints par mise en tension en sens longitudinal jusqu'à la force nominale de conception et fixés sur les ossatures annulaires (7).

4. Complexe de transport à très grande vitesse selon la revendication 3, **caractérisé en ce que** du béton est utilisé en tant que matériau durcissable de la couche intermédiaire (12) de la paroi (10) du tunnel sous vide hermétique (9).

5. Complexe de transport à très grande vitesse selon la revendication 2, **caractérisé en ce que** les couches interne et externe (8.1, 8.2) du tunnel sous vide hermétique (9) sont réalisées avec la composition durcissable polymère renforcée sous forme de polyuréthane, et/ou de polyurée, et/ou de polyétheréthercétone, et/ou de combinaisons de ceux-ci.

6. Complexe de transport à très grande vitesse selon la revendication 2, **caractérisé en ce que** les ossatures annulaires (7) sont positionnés les unes par rapport aux autres à la distance L, m, définie par la dépendance :

$$0,1 \leq L/D \leq 5,$$

où $D$, m - diamètre extérieur du tunnel sous vide scellé (9).

7. Complexe de transport à très grande vitesse selon la revendication 2, **caractérisé en ce que** la couche intermédiaire (12) de la paroi (10) du tunnel sous vide hermétique (9) est réalisée avec une épaisseur $h_0$, m, définie par le rapport :

$$0,025 \leq h_0/D \leq 0,25$$

8. Complexe de transport à très grande vitesse selon la revendication 2, **caractérisé en ce que** les couches interne et externe (8.1, 8.2) de la paroi (10) du tunnel sous vide hermétique (9) sont réalisées avec des épaisseurs, respectivement, $h_1$, m, et $h_2$, m, définies par les rapports :

$$0,01 \leq h_1/h_0 \leq 0,1,$$

$$0{,}01 \le h_2/h_0 \le 0{,}1$$

9. Complexe de transport à très grande vitesse selon la revendication 2, *caractérisé en ce que* les éléments porteurs (P) des couches interne et externe (8.1, 8.2) de la paroi (10) du tunnel sous vide hermétique (9) sont réalisés avec un diamètre, $d_0$, m, défini par les rapports :

$$0{,}25 \le d_0/d_1 \le 0{,}95,$$

$$0{,}25 \le d_0/d_2 \le 0{,}95$$

10. Complexe de transport à très grande vitesse selon la revendication 9, *caractérisé en ce que* les éléments porteurs (P) adjacents des couches interne et externe (8.1, 8.2) de la paroi (10) du tunnel sous vide hermétique (9) sont positionnés avec, entre eux, un espace $\delta$, m, défini par le rapport :

$$0 < \delta/d_0 < 5$$

11. Complexe de transport à très grande vitesse selon la revendication 2, *caractérisé en ce que* les couches adjacentes de la paroi (10) du tunnel sous vide hermétique (9) sont reliées les unes aux autres dans le sens transversal sur toute leur longueur.

Fig. 1

Fig. 2

Fig. 3

5.1

10

9

15

4

5.2

Fig. 4

Fig. 5

Fig. 6

Fig. 7

Fig. 8

Fig. 9

Fig. 10

Fig. 11

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018098405 A2
- RU 2252881
- RU 2109647
- RU 2288398
- RU 2503560
- RU 2271291

**Non-patent literature cited in the description**

- **YUNITSKI A.E**. String transport systems: on Earth and in space. *Monograph*, 1995, 337